# EUROPEAN PATENT APPLICATION

(11) **EP 4 266 115 A1**
(43) Date of publication of application: **25.10.2023**
(21) Application number: 23167927.5
(22) Date of filing: 14.04.2023
(51) Int. Cl.: G02B 30/56

(54) **HYBRID CABLE CONNECTION SET, COUPLER AND METHOD FOR INTERCONNECTING HYBRID CABLES**

(30) Priority: 22.04.2022 NL 2031678
(71) Applicant: Isolectra B.V., 3072 AP Rotterdam (NL)
(72) Inventor: PALS, Ludovicus Quirinus Maria, 3072 AP Rotterdam (NL); VAESSEN, Wilhelmus Theodorus Erik, 3072 AP Rotterdam (NL)
(74) Representative: Melchior, Robin

(57) **Abstract**

The invention relates to a hybrid cable connection set (1), a coupler (4) and a method for interconnecting hybrid cables (H1,H2), wherein each hybrid cable (H1,H2) has first cable conductors (E1,E2,E3) of a first type and second cable conductors (L1,L2) of a second type different from the first type, wherein the hybrid cable connection set (1) comprises a first end connector (2) and a second end connector (3) for terminating the first hybrid cable (H1) and the second hybrid cable (H2), respectively, wherein the first end connector (2) and the second end connector (3) each comprise a connector body (20,30) that defines a first connector section (21,31) for terminating the first cable conductors and a second connector section (22,32) for terminating the second cable conductors, wherein the hybrid cable connection set (1) further comprises a coupler (4) for establishing an indirect coupling between the first connector sections (21,31) and a direct coupling between the second connector sections (22,32) of the first end connector (2) and the second end connector (3).

## Description

### BACKGROUND

The invention relates to a hybrid cable connection set, a coupler and a method for interconnecting hybrid cables.

US 9,755,382 B2 discloses a connector system for optical fibers, electrical conductors or both. Various embodiments of male connectors and female connectors are disclosed which can be interconnected to form a coupling between two hybrid cables.

### SUMMARY OF THE INVENTION

A disadvantage of the known connector system is that the hybrid cables can only be successfully interconnected when a compatible male and female connector are provided. Hence, a carefully devised network plan is required detailing which connectors to use where in order to successfully interconnect the hybrid cables in a network. As networks grow more and more complex, a mistake can easily be made. Moreover, small deviations from the original plan, such as rerouting a hybrid cable to an alternative destination, may cause connector incompatibility issues.

Although it is generally known to provide adapters to indirectly couple connectors of the same type, these adapters typically introduce at least two transitions in the conductive path of each conductor; a first transition from the first connector to the adapter and a second transition from the adapter to the second connector. Such transitions may introduce signal losses, in particular when interconnecting optical conductors, such as optical fibers.

It is an object of the present invention to provide a hybrid cable connection set, a coupler and a method for interconnecting hybrid cables, wherein connector compatibility can be improved and/or wherein losses across the interconnection can be minimized.

According to a first aspect, the invention provides a hybrid cable connection set for interconnecting a first hybrid cable and a second hybrid cable, wherein each hybrid cable has one or more first cable conductors of a first type and one or more second cable conductors of a second type different from the first type, wherein the hybrid cable connection set comprises a first end connector and a second end connector for terminating the first hybrid cable and the second hybrid cable, respectively, wherein the first end connector and the second end connector each comprise a connector body that defines a first connector section for terminating the one or more first cable conductors and a second connector section for terminating the one or more second cable conductors, wherein the hybrid cable connection set further comprises a coupler for establishing an indirect coupling between terminal ends of the one or more first cable conductors in the first connector section of the first end connector and terminal ends of the one or more first cable conductors in the first connector section of the second end connector, and a direct coupling between terminal ends of the one or more second cable conductors in the second connector section of the first end connector and terminal ends of the one or more second cable conductors in the second connector section of the second end connector.

By providing both an indirect coupling and a direct coupling via the same coupler, both types of conductors can be coupled in a single action in a way that best suits the objective of compatibility between the end connectors and/or minimizing losses across the interconnection. In particular, the direct coupling via the coupler ensures that there is only one transition across the interconnection of the second conductors. Moreover, the indirect coupling via the same coupler allows for establishing, in addition to the direct coupling of the second conductors, an indirect coupling of the first conductors, such as a male-to-female, male-to-male or female-to-female coupling, as detailed further in the embodiments to follow. In case of male-to-male or female-to-female coupling, the first connector sections of all connectors can be the same, for example all male or all female, such that any end connector within a network of hybrid cables can be connected, via the coupler, to any other end connector within the network.

In one embodiment the coupler comprises a first coupling section and a second coupling section for mating with the first connector sections and the second connector sections, respectively, of the first end connector and the second end connector. Hence, each coupling section can be adapted to best suit the interconnection to be made between the conductors in the respective connector sections.

Preferably, the first coupling section comprises one or more coupling conductors for forming a conductive bridge between the one or more first cable conductors of the hybrid cables to be interconnected. The one or more coupling conductors can bridge the gap between the respective one or more first cable conductors in a way that promotes the aforementioned compatibility, i.e. by connecting to the respective one or more first cable conductors of each hybrid cable in the same way.

More preferably, the coupler, the first end connector and the second end connector each comprise one or more of complementary plugs and sockets for conductively coupling the one or more coupling conductors to the one or more first cable conductors of the hybrid cables to be interconnected. The complementary plugs and sockets can be securely mated with each other to form a safe and reliable connection between one or more first cable conductors and the coupler. Moreover, the plugs and sockets can be effectively recessed and/or shielded from unintentional manual contact, for example to prevent electrocution.

More preferably, the one or more of complementary plugs and sockets are electrically conductive. The plugs and sockets can form a reliable electrical connection without any significant electrical losses.

In a further embodiment the second coupling section comprises a through hole for allowing for a direct coupling between the terminal ends of the one or more second cable conductors of the hybrid cables to be interconnected. In particular, the second connector sections of the respective connectors can be passed through the through hole into a position directly opposite to each other and with the respective terminal ends aligned with each other. Meanwhile, the connector body surrounding the through hole can effectively guide and/or retain the end connectors in the second coupling section.

In a further embodiment the second connector section comprises one or more direct coupling members that form the terminal ends of the one or more second conductors, wherein the second coupling section allows for a direct coupling between the one or more direct coupling members of the first end connector and the one or more direct coupling members of the second end connector. The one or more direct coupling members can be used to terminate the one or more second conductors and can be optimized for direct contact with minimum loss.

Preferably, the one or more direct coupling members are fiber optic ferrules. The fiber optic ferrules can be used to confine the stripped end of a fiber or a fiber bundle and are adapted for optimal transmission of the optical signal when directly opposite to or in abutting contact with a similar or identical fiber optic ferrule.

In another embodiment the coupler comprises a first coupler side and a second coupler side, opposite to the first coupler side, for coupling to the first end connector and the second end connector, respectively.

Preferably, the first coupler side and the second coupler side are point symmetrical about a center between the first coupler side and the second coupler side. Consequently, the end connectors can be connected to the coupler irrespective of which coupler side is aligned with the respective end connectors. In other words, it does not matter which coupler side is aligned with which end connector. Hence, any one of the first coupler side and the second coupler side can be aligned with and/or connected to a respective one of the first end connector and the second end connector. The installer does not need to align the first coupler side and the second coupler side with respect to a specific one of the first end connector and the second end connector, which makes interconnection of the two end connectors, using the coupler, very convenient.

Additionally or alternatively, the first end connector and the second end connector are point symmetrical about a center between the first coupler side and the second coupler side when oppositely aligned with the first coupler side and the second coupler side, respectively. In other words, each end connector can be connected to either coupler side by simply rotating the respective end connector about the center.

In another embodiment the first end connector and the second end connector are identical. Hence, all hybrid cables can be provided with and/or terminated by the same end connector, such that any end connector within a network of hybrid cables can be connected, via the coupler, to any other end connector within the network. Alternatively, if local regulations require different end connectors, a difference, for example an asymmetry, may be added to prevent insertion of the first end connector into the coupler at the second coupler side and insertion of the second end connector into the coupler at the first coupler side.

In another embodiment the first end connector is arranged for connecting to the coupler in a first connection direction, wherein the second connector section of the first end connector projects beyond the first connector section of the first end connector in said first connection direction. In other words, the one or more second conductors in the second connector section of the first end connector can already be conveniently arranged directly opposite to and/or aligned with the respective one or more second conductors of the second end connector while the one or more first conductors in the first connector sections of the respective end connectors are still sufficiently spaced apart from each other to be interconnected indirectly.

In another embodiment the first end connector is arranged for connecting to the coupler in a first connection direction, wherein the first connector section and the second connector section of the first end connector are insertable to the coupler parallel to or in the first connection direction. Therefore, both connector sections of the first end connector can be inserted simultaneously in the first connection direction.

In another embodiment the first end connector is arranged for connecting to the coupler in a first connection direction, wherein the first connector section and the second connector section of the first end connector are insertable into the coupler in the first connection direction with a single manual action. Hence, the first end connector can be coupled quickly, for example in a single, uninterrupted and/or continuous movement, preferably without the use of tools.

In another embodiment the coupler comprises a first locking member and a second locking member for locking the first end connector and the second end connector, respectively, with respect to the coupler. In this way, accidental and/or unintentional release of the end connectors from the coupler can be prevented.

In another embodiment the coupler comprises a first coupler side, a second coupler side, opposite to the first coupler side, and a center body extending between the first coupler side and the second coupler side, wherein the center body defines a coupling chamber for receiving the second connector sections of the first end connector and the second end connector. In the coupling chamber, the second connector sections can be aligned for the direct coupling between the terminal ends of the one or more second conductors of the hybrid cables to be interconnected.

Preferably, the coupler further comprises a seat in the coupling chamber for aligning the second connector sections of the first end connector and the second end connector. The seat can be used as a reference for the correct mutual positioning of the respective second connector sections. The seat may further actively align and/or correct any misalignment of the respective second connector sections. Once the respective second connector sections are received in or on the seat, they are less likely to shift out of alignment.

Additionally or alternatively, the hybrid cable connection set further comprises a cover that is removably attachable to the coupler in a cover position in which the cover covers the coupling chamber, wherein the cover, when removed, exposes the coupling chamber for manual access. In particular, the installer can visually inspect the mutual positioning of the respective second connector sections and manually correct and/or manipulate said mutual positioning for an optimal direct coupling between the terminal ends of the one ore more second conductors of the hybrid cables to be interconnected. Moreover, in the cover position, the cover may restrict the freedom of movement of the respective second end connector sections, in particular relative to the aforementioned seat. Hence, with the cover present, the respective second connector sections are less likely to shift relative to each other.

Preferably, the cover comprises a clip body that is arranged to be attached to the coupler through clamping. Thus, the cover can be attached manually without requiring additional fasteners or the like.

In another embodiment the coupler is arranged for coupling the first end connector and the second end connector in-line. In other words, the respective end connectors can be coupled to the coupler in opposite, mutually parallel or colinear connection directions.

According to a second aspect, the invention provides a coupler for use in a hybrid cable connection set according to any one of the embodiments of the aforementioned first aspect of the invention.

The coupler is already discussed as part of the hybrid cable connection set according to the first aspect of the invention and therefore has the same technical advantages, which will not be repeated hereafter.

According to a third aspect, the invention provides a method for interconnecting a first hybrid cable and a second hybrid cable using a hybrid cable connection set according to any one of the embodiments of the first aspect of the invention, wherein the method comprises the steps of:
- establishing an indirect coupling between the terminal ends of the one or more first cable conductors in the first connector sections of the first end connector and the second end connector with the coupler; and
- establishing a direct coupling between the terminal ends of the one or more second cable conductors in the second connector sections of the first end connector and the second end connector.

The method relates to the practical implementation of the hybrid cable connection set and therefore has the same technical advantages, which will not be repeated hereafter.

In one embodiment of the method the direct coupling between the second connector sections of the first end connector and the second end connector involves arranging the one or more second cable conductors of the hybrid cables to be interconnected directly opposite to each other.

In a further embodiment of the method the coupler comprises a first coupler side and a second coupler side, opposite to the first coupler side, for coupling to the first end connector and the second end connector, respectively, wherein the first end connector and the second end connector are exchangeable between the first coupler side and the second coupler side.

In a further embodiment of the method the first end connector is connected to the coupler in a first connection direction, wherein the first connector section and the second connector section of the first end connector are inserted into the coupler in the first connection direction with a single manual action.

In another embodiment the method further comprises the step of:
- locking the first end connector and the second end connector, respectively, with respect to the coupler.

In another embodiment of the method the coupler comprises a first coupler side, a second coupler side, opposite to the first coupler side, and a center body extending between the first coupler side and the second coupler side, wherein the center body defines a coupling chamber for receiving the second connector sections of the first end connector and the second end connector, wherein the method further comprises the steps of:
- visually checking the direct coupling between the second connector sections of the first end connector and the second end connector in the coupling chamber; and
- removably attaching a cover to the coupler in a cover position in which the cover covers the coupling chamber.

Preferably, the method further comprises the step of:
- manually correcting any misalignment between the second connector sections of the first end connector and the second end connector in the coupling chamber prior to removably attaching the cover.

In a further embodiment of the method the first end connector and the second end connector are coupled in-line.

In a further embodiment of the method the one or more first cable conductors are electrically conductive and the one or more second cable conductors are optically conductive.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached schematic drawings, in which:
figures 1, 2 and 3 show isometric views from above of a hybrid cable connection set according to the invention during the steps of a method for interconnecting a first hybrid cable and a second hybrid cable;
figures 4 and 5 show cross sections of the hybrid cable connection set according to the lines IV-IV and V-V, respectively, in figures 1 and 3; and
figure 6 shows an isometric view from below of the hybrid cable connection set according to the step of the method as shown in figure 2.

### DETAILED DESCRIPTION OF THE INVENTION

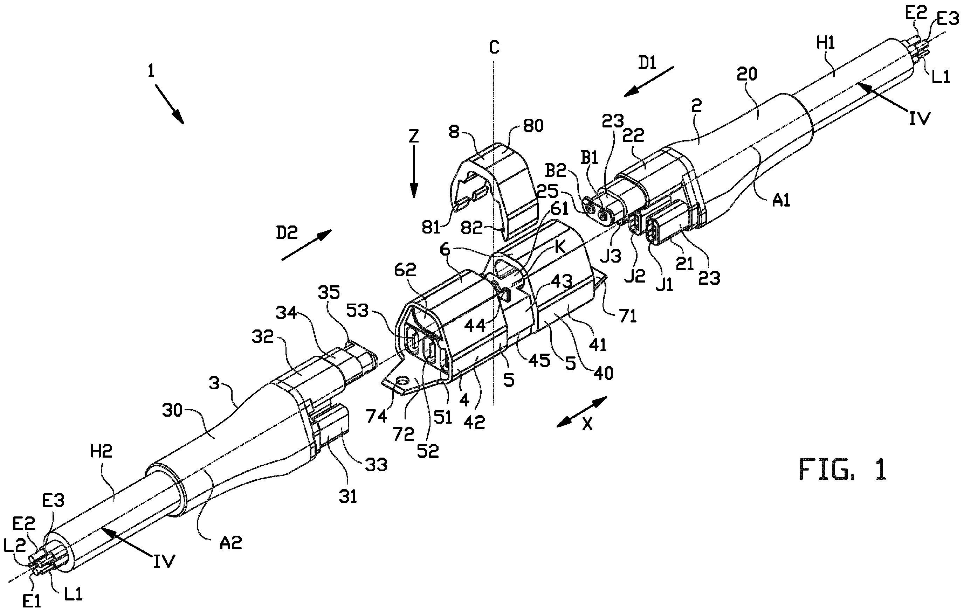

Figures 1-6 show a hybrid cable connection set 1 according to an exemplary embodiment of the invention. The hybrid cable connection set 1 is used for interconnecting a first hybrid cable H1 and a second hybrid cable H2, in particular hybrid cables for data and power transmission in a power and data network of a domestic, commercial, business or industrial environment.

As shown in figure 1, in this example, each hybrid cable H1, H2 has three first cable conductors E1, E2, E3 of a first type. Alternatively, each hybrid cable H1, H2 may comprise just one first cable conductor, two first cable conductors or more than three first cable conductors. In this example, the first cable conductors E1-E3 are electrically conductive or are suitable for transmitting electrical power. In particular, the first cable conductors E1-E3 are made or comprise copper or another suitable electrically conductive material.

Each hybrid cable H1, H2 further has two second conductors L1, L2 of a second type. Alternatively, each hybrid cable H1, H2 may comprises just one second conductor or more than two second conductors. In this example, the second cable conductors L1, L2 are optically conductive or are suitable for transmitting light signals.

The hybrid cable H1, H2 further has an outer sheath that contains all of the aforementioned conductors E1-E3, L1, L2. Both hybrid cables H1, H2 define a longitudinal axis A1, A2 which, when connected by the hybrid cable connection set 1, extend in-line, coaxially or colinearly in an axial direction X parallel to the respective longitudinal axes A1, A2.

The hybrid cable connection set 1 comprises a first end connector 2 and a second end connector 3 for terminating the first hybrid cable H1 and the second hybrid cable H2, respectively.

The hybrid cables H1, H2 are stripped and the conductors E1-E3, L1, L2 exposed as a result thereof are received or inserted into the respective end connectors 2, 3 towards the distal ends of the respective end connectors 2, 3 where they are suitably terminated to form terminal ends. The above process is typically already carried out at a factory to provide plug-and-play hybrid cables H1, H2 with the end connectors 2, 3 already connected thereto. Alternatively, the hybrid cables H1, H2 may be terminated on site using the end connectors 2, 3.

The hybrid cable connection set 1 further comprises an adapter or a coupler 4 that is adapted, configured or arranged for coupling or interconnecting the respective end connectors 2, 3. The first end connector 2 and the second end connector 3 are mountable, insertable and/or attachable to coupler 4 in a first connection direction D1 and a second connection direction D2, respectively. In this exemplary embodiment, the both connection directions D1, D2 are parallel, colinear or in-line. In particular, the connection directions D1, D2 are opposite to each other, yet parallel to the axial direction X and/or the respective longitudinal axes A1, A2.

Alternatively, the end connectors 2, 3 may be connectable to the coupler 4 in different connection directions, for example when an alternative coupler is provided that is configured for interconnecting the end connectors 2, 3 at a right angle or an oblique angle. It is submitted that, despite the different connection directions D1, D2, the working principle of the end connectors 2, 3 and the coupler 4, as detailed hereafter, remains the same.

When aligned oppositely to each other along the axial direction X and/or facing to the coupler 4 in the connection directions D1, D2, the first end connector 2 and the second end connector 3 are point symmetrical or substantially point symmetrical about a center C at said coupler 4. In other words, the shape, structure and/or configuration of the second end connector 3 corresponds to or is identical to the shape, structure and/or configuration of the first end connector 2 when rotating the first end connector 2 over one-hundred-and-eighty degrees about the center C.

In this example, the first end connector 2 and the second end connector 3 are identical or substantially identical in terms of geometry, structure, configuration and/or functionality. Hence, it will be clear that any features described hereafter solely in relation to one of the end connectors 2, 3 can be applied equally to the other one of the end connectors 2, 3.

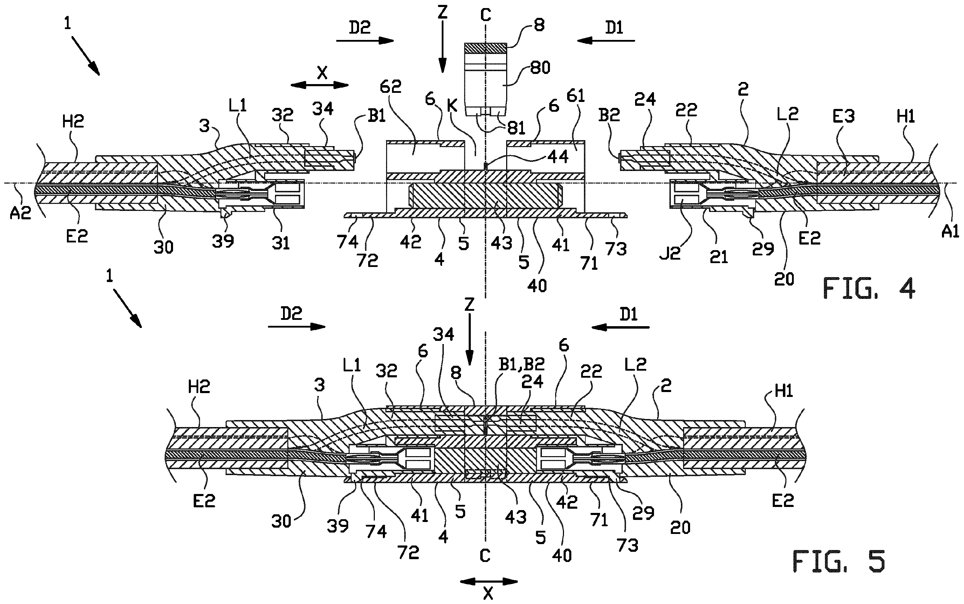

As best seen in figure 1, each end connector 2, 3 has a connector body 20, 30 that defines a first connector section 21, 31 and a second connector section 22, 32 for terminating the first conductors E1-E3 and the second conductors L1, L2, respectively. Preferably, the connector sections 21, 22, 31, 32 for each end connector 2, 3 do not overlap with each other so that the first conductors E1-E3 can be terminated in an area that is separate and/or spaced apart from the area in which the second conductors L1, L2 are terminated. As shown in figure 4, in this exemplary embodiment, the connector body 20, 30 has a Y-shaped cross sectional shape that branches into the two separate connector sections 21, 22, 31, 32 for each end connector 2, 3.

As shown in figure 1, the first connector section 21, 31 comprises a number of ports 23, 33 equal to the number of first conductors E1, E2, E3 of the respective hybrid cable H1, H2. Each port 23, 33 houses a socket or jack J1, J2, J3, in particular in the form of a female crimp terminal, that is conductively connected to the stripped end of a respective one of the first conductors E1, E2, E3 to form the terminal end thereof. Alternatively, each port 23, 33 may house a plug, for example a suitable male crimp terminal. Preferably, each jack J1, J2, J3 is slightly recessed into the port 33. The port 33 protects or shields the jack J1, J2, J3 accommodated therein from unintentional manual contact. In this exemplary embodiment, the ports 23, 33 are arranged side-by-side. Alternative embodiments having stacked or grouped configurations are also envisioned.

The second connector section 21, 31 comprises a protrusion 24, 34 projecting in the respective connection direction D1, D2 beyond the first coupling section of the respective end connector 2, 3. In this exemplary embodiment, the end connectors 2, 3 are provided with flanges 25, 35 at the distal ends of the respective protrusions 24, 34. These flanges 25, 35 may be used to pull in or retain the respective end connectors 2, 3 with respect to a device to which the respective end connector 2, 3 is fitted. Each end connector 2, 3 is further provided with a number of direct coupling members B1, B2 equal to the number of second conductors L1, L2 of the respective hybrid cable H1, H2. Each direct coupling member B1, B2 is conductively connected to a respective one of the second conductors L1, L2 to form a terminal end thereof. Each direct coupling members B1, B2 of one of the end connectors 2, 3 is adapted, configured or arranged for establishing a direct coupling with a counterpart direct coupling member B1, B2 of the other of the end connectors 2, 3. In this example, the direct coupling members B1, B2 are arranged directly opposite to each other, yet remain slightly spaced apart from each other. Alternatively, the direct coupling members B1, B2 may be configured for signal transmission via direct physical abutment with another direct coupling member B1, B2. In this exemplary embodiment, the direct coupling members B1, B2 are fiber optic ferrules.

As shown in figures 4, 5 and 6, each end connector 2, 3 further comprises a locking member, in this exemplary embodiment in the form of a hook 29, 39, for locking the respective end connector 2, 3 with respect to the coupler 4 in a manner described in more detail hereafter. Alternatively, a recess or edge may be provided for locking interaction with a suitably shaped hook of the coupler 4.

As shown in figures 1 and 4, the coupler 4 is adapted, configured or arranged for establishing an indirect coupling between the terminal ends of the first cable conductors E1-E3 in the first connector section 21 of the first end connector 2 and the terminal ends of the first cable conductors E1-E3 in the first connector section 31 of the second end connector 3. In the context of the present invention, the term 'indirect' should be interpreted as a coupling that is established using an intervening physical element, in this example the coupler 4. Instead, the terminal ends of the first cable conductors E1-E3 are coupled indirectly via the coupler 4. The coupler 4 can thus act as a bridge between the terminal ends of the respective first cable conductors E1-E3.

The coupler 4 is further adapted, configured or arranged for establishing a direct coupling between the terminal ends of the second cable conductors L1, L2 in the second connector section 22 of the first end connector 2 and the terminal ends of the second cable conductors L1, L2 in the second connector section 32 of the second end connector 3. In the context of the present invention, the term 'direct' should be interpreted as a direct conductive interconnection between the terminal ends of the second cable conductors L1, L2 of the respective end connectors 2, 3 without conductive intervention of the coupler 4. More in particular, the 'direct' coupling is obtained as a result of the respective terminal ends being directly opposite to each other and/or aligned with each other without any conductive element of the coupler 4 in between. It is noted that a 'direct' coupling also includes a situation in which the respective terminal ends are directly opposite to each other but not in direct physical contact, for example when the signal is transferred from one terminal end to the other via an air gap.

As best seen in figures 1 and 4, the coupler 4 has a first coupler side 41, a second coupler side 42, opposite to the first coupler side 41, and a center body 43 extending between the first coupler side 41 and the second coupler side 42. The first coupler side 41 is adapted for mating with or coupling to the first end connector 2. The second coupler side 42 is adapted for mating with or coupling to the second end connector 3. Like the first end connector 2 and the second end connector 3, the coupler sides 41, 42 are point symmetrical about the center C between the first coupler side 41 and the second coupler side 42. Hence, the orientation of the coupler 4 can be reversed or inverted about said center C in which case the second coupler side 42 would be facing the first end connector 2 and the first coupler side 41 would be facing the second end connector 3. The end connectors 2, 3 can be coupled to either coupler side 41, 42 irrespective of the orientation of the coupler 4.

The coupler 4 further comprises a first coupling section 5 and a second coupling section 6 for mating with or receiving the first connector sections 21, 31 and the second connector sections 22, 32, respectively, of the first end connector 2 and the second end connector 3.

The first coupling section 5 comprises a number of coupling conductors 51, 52, 53 equal to the number of first conductors E1-E3 for forming a conductive bridge between the terminal ends of the first cable conductors E1-E3 in the first connector section 21 of the first end connector 2 and the terminal ends of the first cable conductors E1-E3 in the first connector section 31 of the second end connector 3. The coupling conductors 51, 52, 53 may for example be strips of conductive material, in particular copper, extending continuously from the first coupler side 41 to the second coupler side 42 through the center body 43. At each coupler side 41, 42, the coupling conductors 51, 52, 53 may be terminated in the form of plugs that can engage the complementary jacks J1, J2, J3 in the ports 23, 33 of the respective end connectors 2, 3. Alternatively, the coupling conductors 51, 52, 53 may be terminated with a suitable jack or socket, for example a female crimp terminal, to engage with a complementary plug at the terminal ends of the first cable conductors E1-E3 of the respective end connectors 2, 3.

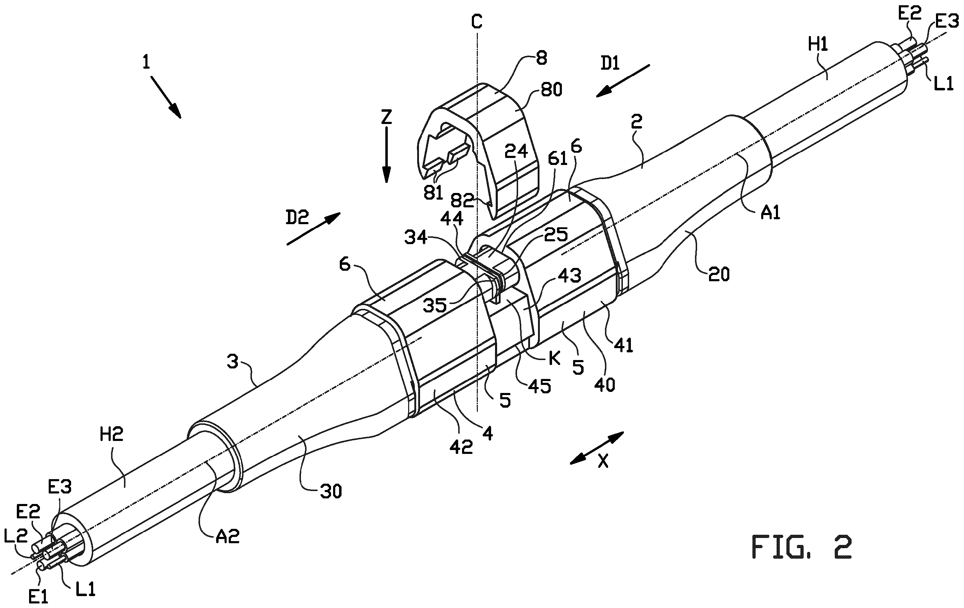

As further shown in figures 1 and 4, the center body 43 defines a coupling chamber K for receiving the second connector sections 22, 32 of the first end connector 2 and the second end connector 3. The second coupling section 6 comprises a first through hole 61 and a second through hole 62 extending in the coupler body 40 through the first coupler side 41 and the second coupler side 42, respectively, up to and/or debouching into said coupling chamber K from opposite sides. The second connector sections 22, 32 can be at least partially received in the respective connection directions D1, D2 through the respective through holes 61, 62 into the coupling chamber K, as shown in figures 2 and 5, for allowing the aforementioned direct coupling between the terminal ends of the second conductors L1, L2.

As shown in figures 1 and 4, the coupler 4 further comprises a holder or a seat 44 in the coupling chamber K for receiving, positioning and/or aligning the second connector sections 22, 32 of the first end connector 2 and the second end connector 3 once they are received into the coupling chamber K via the respective through holes 61, 62. Note that the protrusions 24, 34 of the respective second connector sections 22, 32 have sufficient length in the respective connection directions D1, D2 to reach up to the aforementioned seat 44. The seat 44 may be adapted or shaped to support or accommodate the direct coupling members B1, B2 of the respective end connectors 2, 3 without interfering with the direct coupling between said direct coupling members B1, B2.

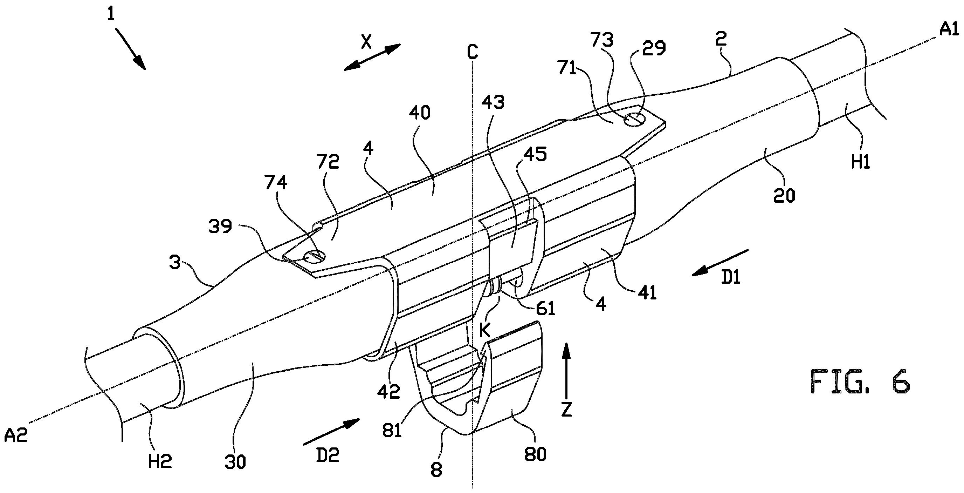

As best seen in figure 6, the coupler 4 further comprises a first locking member 71 and a second locking member 72 for locking the first end connector 2 and the second end connector 3, respectively, with respect to the coupler 4. In particular, the locking members 71, 72 can prevent unintentional retraction or release of the end connectors 2, 3 from the coupler 4. In this example, the locking members 71, 72 are adapted, configured or arranged to resiliently snap-lock onto the hooks 29, 39 of the respective end connectors 2, 3 in response to said end connectors 2, 3 being inserted into the coupler 4 in the respective connection directions D1, D2. In particular, the locking members 71, 72 are formed as resilient fingers or wings extending from the coupler body 40 towards the respective end connectors 2, 3. Each locking member 71, 72 is provided with a lock opening 73, 74 that snap onto the respective hooks 29, 39 once the end connectors 2, 3 are sufficiently inserted into the coupler 4.

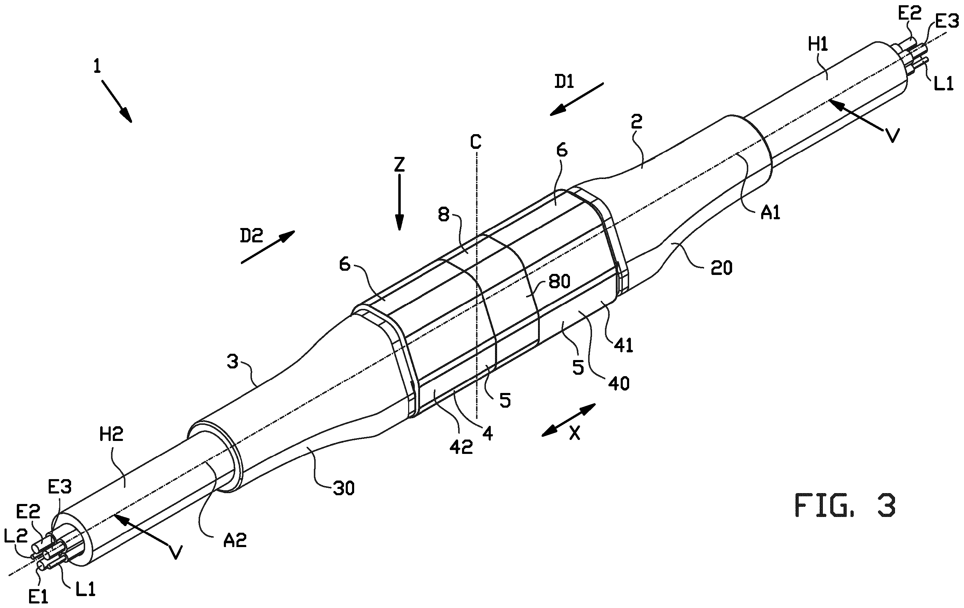

As shown in figures 1, 3, 4 and 5, the hybrid cable connection set 1 may optionally comprise a cap or a cover 8 that is removably attachable to the coupler 4 in a cover position, as shown in figures 3 and 5, in which the cover 8 covers the coupling chamber K. The cover 8, when removed, exposes the coupling chamber K for visual inspection, verification, manual access, manual manipulation, manual correction and/or manual alignment.

The cover 8 comprises a clip body 80 that is arranged to be attached to the coupler 4 through clamping. The cover 8 can be mounted over the coupler 4 in a clamping direction Z, transverse or perpendicular to the axial direction X and/or the respective connection directions D1, D2. In particular, the clip body 80 defines two clip edges 81, 82 for engaging or hooking behind respective mounting edges 45 at the center body 43 of the coupler 4, one of which is shown in figure 2 and the other one is shown in figure 6. The clip body 80 is resiliently deformable to allow for the clip edges 81, 82 to snap over the respective mounting edges 45.

The cover 8 can optionally be made of a transparent material such that the direct coupling between the terminated ends of the second connector sections 22, 32 of the respective end connectors 2, 3 remains visible for visual inspection even after the cover 8 is fitted to the coupler 4 in the coupling position.

Alternatively, the cover 8 may be an integral part of the coupler 4, in which case the coupling chamber K is inaccessible.

A method for interconnecting the first hybrid cable H1 and the second hybrid cable H2 using the aforementioned hybrid cable connection set 1 will now be briefly elucidated with reference to figures 1-6.

Figures 1 and 3 show the situation in which the hybrid cables H1, H2 have been provided with the end connectors 2, 3. The first end connector 2 and the second end connector 3 have been positioned on opposite sides of the coupler 4 and are ready to be inserted in the respective connection directions D1, D2. The cover 8 is in a position spaced apart from the coupler 4 as well, exposing the coupling chamber K.

Figure 2 shows the situation in which the first end connector 2 and the second end connector 3 have been received in, inserted into and/or coupled with the coupler 4 at the first coupler side 41 and the second coupler side 42, respectively.

As the end connectors 2, 3 are mated with the coupler 4, the indirect coupling is established between the terminal ends of the first cable conductors E1-E3 in the first connector section 21 of the first end connector 2 and the terminal ends of the first cable conductors E1-E3 in the first connector section 31 of the second end connector 3 with or via the coupling conductors 51, 52, 53 in the coupler 4. Simultaneously or shortly thereafter, the direct coupling is established, between the terminal ends of the second cable conductors L1, L2 in the second connector section 22 of the first end connector 2 and the terminal ends of the one or more second cable conductors L1, L2 in the second connector section 32 of the second end connector 3.

Each end connector 2, 3 can be coupled to the coupler 4 with a single manual action, for example a single relative movement between the respective end connector 2, 3 and the coupler 4. In particular, the direct coupling and the indirect coupling can be established simultaneously or almost simultaneously by the same manual action.

The installer can visually inspect the direct coupling between the terminal ends of the second cable conductors L1, L2 in the coupling chamber K and manipulate, correct or align the mutual positions of said terminal ends if necessary.

Figures 3, 5 and 6 show the situation in which the cover 8 has been attached to the coupler 8 in the cover position to cover the coupling chamber K.

As shown in figure 6, the hooks 29, 39 of the end connectors 2, 3 are now engaged by the locking members 71, 72 of the coupler 4 to retain or lock the end connectors 2, 3 to the coupler 4. The end connectors 2, 3 can be released from the locking action of the locking members 71, 72 by forcefully bending the locking members 71, 72 away from the hooks 29, 39, for example with the use of a tool.

The first end connector 2 and the second end connector 3 are exchangeable between the first coupler side 41 and the second coupler side 42. Conversely, the orientation of the coupler 4 can be reversed to align the coupler sides 41, 42 with a different end connector 2, 3. Moreover, in a network with hybrid cables H1, H2 which are all fitted with the same end connectors 2, 3, any end connector 2, 3 can be fitted to any one of the coupler sides 41, 42.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

### LIST OF REFERENCE NUMERALS

- 1: hybrid cable connection set
- 2: first end connector
- 20: connector body
- 21: first connector section
- 22: second connector section
- 23: port
- 24: protrusion
- 25: flange
- 29: hook
- 3: second end connector
- 30: connector body
- 31: first connector section
- 32: second connector section
- 33: port
- 34: protrusion
- 35: flange
- 39: hook
- 4: coupler
- 40: coupler body
- 41: first coupler side
- 42: second coupler side
- 43: center body
- 44: seat
- 45: mounting edge
- 5: first coupling section
- 51: first coupling conductor
- 52: second coupling conductor
- 53: third coupling conductor
- 6: second coupling section
- 61: first through hole
- 62: second through hole
- 71: first locking member
- 72: second locking member
- 73: first lock opening
- 74: second lock opening
- 8: cover
- 80: clip body
- 81: first clip edge
- 82: second clip edge
- A1: first longitudinal axis
- A2: second longitudinal axis
- B1: first direct coupling member
- B2: second direct coupling member
- C: center
- D1: first connection direction
- D2: first connection direction
- E1: first electrical cable conductor
- E2: second electrical cable conductor
- E3: third electrical cable conductor
- H1: first hybrid cable
- H2: second hybrid cable
- J1: first jack
- J2: second jack
- J3: third jack
- K: coupling chamber
- L1: first optical cable conductor
- L2: second optical cable conductor
- X: axial direction
- Z: clamp direction

## Claims

1. Hybrid cable connection set for interconnecting a first hybrid cable and a second hybrid cable, wherein each hybrid cable has one or more first cable conductors of a first type and one or more second cable conductors of a second type different from the first type, wherein the hybrid cable connection set comprises a first end connector and a second end connector for terminating the first hybrid cable and the second hybrid cable, respectively, wherein the first end connector and the second end connector each comprise a connector body that defines a first connector section for terminating the one or more first cable conductors and a second connector section for terminating the one or more second cable conductors, wherein the hybrid cable connection set further comprises a coupler for establishing an indirect coupling between terminal ends of the one or more first cable conductors in the first connector section of the first end connector and terminal ends of the one or more first cable conductors in the first connector section of the second end connector, and a direct coupling between terminal ends of the one or more second cable conductors in the second connector section of the first end connector and terminal ends of the one or more second cable conductors in the second connector section of the second end connector.

2. Hybrid cable connection set according to claim 1, wherein the coupler comprises a first coupling section and a second coupling section for mating with the first connector sections and the second connector sections, respectively, of the first end connector and the second end connector, preferably wherein the first coupling section comprises one or more coupling conductors for forming a conductive bridge between the one or more first cable conductors of the hybrid cables to be interconnected, more preferably wherein the coupler, the first end connector and the second end connector each comprise one or more of complementary plugs and sockets for conductively coupling the one or more coupling conductors to the one or more first cable conductors of the hybrid cables to be interconnected, even more preferably wherein the one or more of complementary plugs and sockets are electrically conductive,
preferably wherein the second coupling section comprises a through hole for allowing a direct coupling between the terminal ends of the one or more second cable conductors of the hybrid cables to be interconnected.

3. Hybrid cable connection set according to any one of claims 2, wherein the second connector section comprises one or more direct coupling members that form the terminal ends of the one or more second conductors, wherein the second coupling section allows for a direct coupling between the one or more direct coupling members of the first end connector and the one or more direct coupling members of the second end connector, preferably wherein the one or more direct coupling members are fiber optic ferrules.

4. Hybrid cable connection set according to any one of the preceding claims, wherein the coupler comprises a first coupler side and a second coupler side, opposite to the first coupler side, for coupling to the first end connector and the second end connector, respectively., preferably wherein the first coupler side and the second coupler side are point symmetrical about a center between the first coupler side and the second coupler side,
preferably wherein the first end connector and the second end connector are point symmetrical about a center between the first coupler side and the second coupler side when oppositely aligned with the first coupler side and the second coupler side, respectively, preferably wherein the first end connector and the second end connector are identical.

5. Hybrid cable connection set according to any one of the preceding claims, wherein the first end connector is arranged for connecting to the coupler in a first connection direction, wherein the second connector section of the first end connector projects beyond the first connector section of the first end connector in said first connection direction.

6. Hybrid cable connection set according to any one of the preceding claims, wherein the first end connector is arranged for connecting to the coupler in a first connection direction, wherein the first connector section and the second connector section of the first end connector are insertable to the coupler parallel to or in the first connection direction, preferably with a single manual action.

7. Hybrid cable connection set according to any one of the preceding claims, wherein the coupler comprises a first locking member and a second locking member for locking the first end connector and the second end connector, respectively, with respect to the coupler.

8. Hybrid cable connection set according to claims 1-3, wherein the coupler comprises a first coupler side and a second coupler side, opposite to the first coupler side, for coupling to the first end connector and the second end connector, respectively, wherein the coupler comprises a center body extending between the first coupler side and the second coupler side, wherein the center body defines a coupling chamber for receiving the second connector sections of the first end connector and the second end connector, preferably wherein the coupler further comprises a seat in the coupling chamber for aligning the second connector sections of the first end connector and the second end connector,
preferably wherein the hybrid cable connection set further comprises a cover that is removably attachable to the coupler in a cover position in which the cover covers the coupling chamber, wherein the cover, when removed, exposes the coupling chamber for manual access, preferably wherein the cover comprises a clip body that is arranged to be attached to the coupler through clamping.

9. Hybrid cable connection set according to any one of the preceding claims, wherein the coupler is arranged for coupling the first end connector and the second end connector in-line.

10. Method for interconnecting a first hybrid cable and a second hybrid cable using a hybrid cable connection set according to any one of claims 1-9, wherein the method comprises the steps of:
- establishing an indirect coupling between the terminal ends of the one or more first cable conductors in the first connector section of the first end connector and the terminal ends of the one or more first cable conductors in the first connector section of the second end connector with the coupler; and
- establishing a direct coupling between the terminal ends of the one or more second cable conductors in the second connector section of the first end connector and the terminal ends of the one or more second cable conductors in the second connector section of the second end connector, preferably wherein the direct coupling between the second connector sections of the first end connector and the second end connector involves arranging the one or more second cable conductors of the hybrid cables to be interconnected directly opposite to each other.

11. Method according to claim 10, wherein the coupler comprises a first coupler side and a second coupler side, opposite to the first coupler side, for coupling to the first end connector and the second end connector, respectively, wherein the first end connector and the second end connector are exchangeable between the first coupler side and the second coupler side.

12. Method according to any one of claim 10 or 12, wherein the first end connector is connected to the coupler in a first connection direction, wherein the first connector section and the second connector section of the first end connector are inserted into the coupler in the first connection direction with a single manual action.

13. Method according to claim 11 or 12, wherein the method further comprises the step of:
- locking the first end connector and the second end connector with respect to the coupler.

14. Method according to any one of claims 10-13, wherein the coupler comprises a first coupler side, a second coupler side, opposite to the first coupler side, and a center body extending between the first coupler side and the second coupler side, wherein the center body defines a coupling chamber for receiving the second connector sections of the first end connector and the second end connector, wherein the method further comprises the steps of:
- visually checking the direct coupling between the second connector sections of the first end connector and the second end connector in the coupling chamber; and
- removably attaching a cover to the coupler in a cover position in which the cover covers the coupling chamber, preferably wherein the method further comprises the step of:
- manually correcting any misalignment between the second connector sections of the first end connector and the second end connector in the coupling chamber prior to removably attaching the cover.

15. Method according to any one of claims 10-14, wherein the one or more first cable conductors are electrically conductive and the one or more second cable conductors are optically conductive.
